Europäisches Patentamt

European Patent Office

Office européen des brevets

(19)

(11) Veröffentlichungsnummer : **0 151 706 B1**

(12) **EUROPÄISCHE PATENTSCHRIFT**

(45) Veröffentlichungstag der Patentschrift :
02.03.88

(21) Anmeldenummer : 84113890.2

(22) Anmeldetag : 16.11.84

(51) Int. Cl.⁴ : **G 07 F 7/08, G 06 K 19/08, G 02 B 5/18**

(54) Beugungsoptisches Sicherheitselement.

(30) Priorität : 03.01.84 CH 5/84

(43) Veröffentlichungstag der Anmeldung :
21.08.85 Patentblatt 85/34

(45) Bekanntmachung des Hinweises auf die Patenterteilung : 02.03.88 Patentblatt 88/09

(84) Benannte Vertragsstaaten :
DE FR GB NL

(56) Entgegenhaltungen :
DE-A- 2 842 972
FR-A- 2 321 158
GB-A- 2 054 890
GB-A- 2 093 404
US-A- 4 094 575
US-A- 4 129 382

(73) Patentinhaber : **LGZ LANDIS & GYR ZUG AG**

**CH-6301 Zug (CH)**

(72) Erfinder : **Greenaway, David L.**
**Stolzengrabenstrasse 59**
**Ch-6317 Oberwil (CH)**

(74) Vertreter : **Müller, Hans-Jürgen, Dipl.-Ing. et al**
**Müller, Schupfner & Gauger Lucile-Grahn-Strasse 38**
**Postfach 80 13 69**
**D-8000 München 80 (DE)**

EP 0 151 706 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein beugungsoptisches Sicherheitselement zur Kennzeichnung der Echtheit von Dokumenten, Zahlungsmitteln, Waren und dergleichen der im Oberbegriff des Anspruchs 1 angegebenen Art.

In letzter Zeit sind zahlreiche beugungsoptische Sicherheitselemente bekanntgeworden, die visuell erkennbare oder maschinenlesbare Echtheitsmerkmale darstellen und zur Kennzeichnung der Echtheit von Dokumenten, Zahlungsmitteln, Waren usw. dienen. Die Massenherstellung solcher Sicherheitselemente erfolgt meist durch ein Prägeverfahren mittels einer Prägematrize, die eine Mikroreliefstruktur aufweist, welche ein Phasenbeugungsgitter oder ein Phasenhologramm darstellt. Die visuelle oder maschinelle Identifizierung der Sicherheitselemente erfolgt vorteilhaft in Reflexion, weil dies besonders starke optische Signale ergibt. Dabei is es zur Erzielung maximaler optischer Signale notwendig, die Phasenbeugungstruktur mit einem reflektierenden Metallfilm zu beschichten. Mittels einer Schutzschicht können die Phasenbeugungsstruktur und der Metallfilm geschützt und innerhalb des Sicherheitselementes verborgen werden. Ein solches Sicherheitselement ist z. B. aus der CH-A-635 949 bekannt.

Darüber hinaus ist in der GB-A-2 093 404 ein Sicherheitselement nach dem Oberbegriff des Anspruches 1 beschrieben, bei dem durch Prägung eine aus zwei ebenen diskontinuierlichen Reflexionsschichten gebildete Phasenbeugungsstruktur erzeugt wird.

Der Erfindung liegt die Aufgabe zugrunde, ein beugungsoptisches Sicherheitselement der eingangs genannten Art zu schaffen, das eine wesentlich höhere Sicherheit gegen Fälschungen und Nachahmungen besitzt und bei dem gewährleistet ist, dass beim Versuch, ein solches Sicherheitselement zu reproduzieren, der gleiche komplexe technologische Weg eingeschlagen werden muss wie bei der ursprünglichen Herstellung des echten Sicherheitselementes.

Die Lösung dieser Aufgabe gelingt durch die im Kennzeichen des Anspruchs 1 angegebenen Merkmale.

Nachfolgend wird ein Ausführungsbeispiel der Erfindung anhand der Zeichnung näher erläutert.

Es zeigen :

Fig. 1 ein reflektierendes Beugungsgitter in der Schnittdarstellung,

Fig. 2 ein erfindungsgemässes Sicherheitselement in der Schnittdarstellung und

Fig. 3 das Sicherheitselement nach der Fig. 2 in verschiedenen Herstellungsstadien.

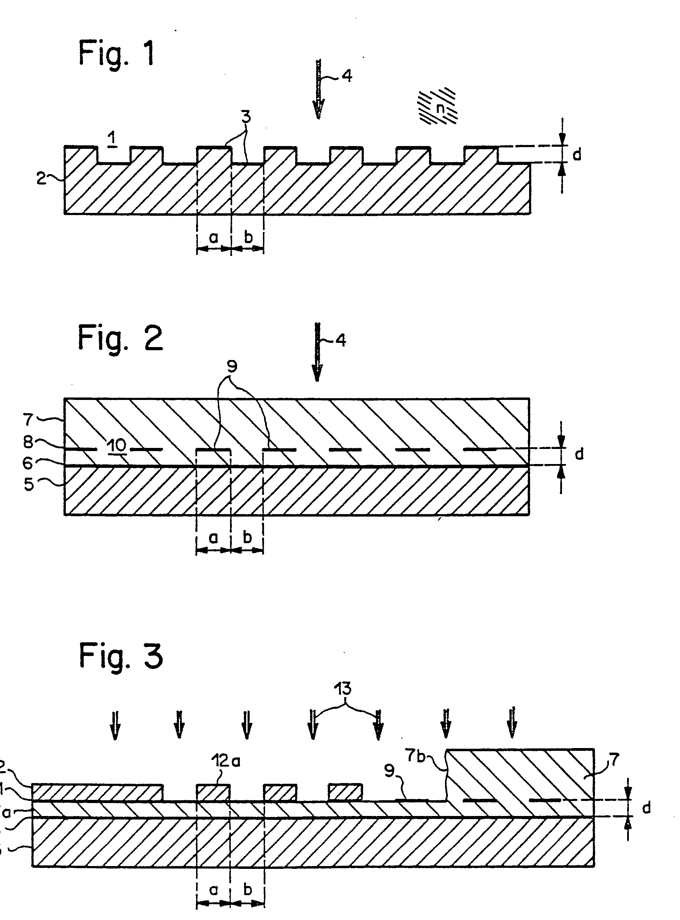

Der Erläuterung der Erfindung wird vorerst ein Sicherheitselement mit einem reflektierenden Phasenbeugungsgitter 1 (Fig. 1) betrachtet, das auf einem Substrat 2 angeordnet ist und ein rechteckförmiges Furchenprofil mit periodischen parallelen Furchen aufweist. Die Kämme und Täler des Furchenprofils bestehen aus metallischen reflektierenden streifenförmigen Flächenfacetten 3. Die Profilbreite ist mit a, die Furchenbreite mit b und die Furchentiefe mit d bezeichnet. Für eine gegebene Wellenlänge eines Leselichtstrahls 4 hängen die optischen Eigenschaften des Beugungsgitters von den Abmessungen a, b und d sowie vom Brechungsindex n des Mediums ab, durch welches das Beugungsgitter 1 abgetastet wird. Eine solche metallische Mikroreliefstruktur ist typisch für den geschilderten Stand der Technik. Vom optischen Standpunkt aus ist für den Beugungseffekt die Anwesenheit der periodischen Flächenfacetten 3 massgebend, die im Abstand d voneinander distanziert sind.

In der Fig. 2 beudeutet 5 ein Substrat eines erfindungsgemässen Sicherheitselementes. Auf die obere, ebene Oberfläche des Substrates 5 ist eine kontinuierliche, dass heisst ununterbrochene, zusammenhängende Reflexionsschicht 6 aufgetragen. Eine für den Leselichtstrahl 4 transparente dielektrische Schicht 7, z. B. eine im sichtbaren Wellenlängenbereich oder im IR-Bereich transparente Kunststoffschicht, befindet sich auf der Reflexionsschicht 6. In die dielektrische Schicht 7 ist eine diskontinuierliche, dass heisst unterbrochene Reflexionsschicht 8 eingebettet. Die beiden Reflexionsschichten 6, 8 sind eben und zueinander parallel. Ihr Abstand ist mit d bezeichnet. Die diskontinuierliche Reflexionsschicht 8 bildet metallische streifenförmige Flächenfacetten 9 mit der Breite a und dem Abstand b.

Die Flächenfacetten 9 bilden zusammen mit der kontinuierlichen Reflexionsschicht 6 eine Phasenbeugungsstruktur 10, die bei der Abtastung durch den Leselichtstrahl 4 ein ähnliches optisches Verhalten zeigt wie das Phasenbeugungsgitter 1 nach der Fig. 1. Die Phasenbeugungsstruktur 10 ist dabei durch die Flächenstruktur der diskontinuierlichen Reflexionsschicht 8 sowie durch den Abstand d der beiden Reflexionsschichten 6, 8 bestimmt. Wenn das Substrat 5 aus transparentem Material besteht, verhält sich das Sicherheitselement von unten wie ein gewöhnlicher Spiegel. Ist die dielektrische Schicht 7 z. B. nur im IR-Bereich transparent, so bleibt die Phasenbeugungsstruktur 10 dem unbewaffneten menschlichen Auge verborgen.

Ein vorteilhaftes Verfahren zur Herstellung des beschriebenen Sicherheitselementes wird nachfolgend anhand der Fig. 3 erläutert, in der von links nach rechts verschiedene Herstellungsstadien dargestellt sind. Auf dem Substrat 5 wird nach bekannten Verfahren die aus Metall bestehende Reflexionsschicht 6 deponiert. Diese Reflexionsschicht 6 wird mit einer ersten transparenten Kunststoffschicht 7a der Dicke d beschichtet ; die Einhaltung der vorbestimmten Dicke d ist sorgfältig zu überwachen. Auf die Kunststoffschicht 7a wird eine kontinuierliche Metallschicht 11 aufgetragen, die später die diskontinuierliche Reflexionsschicht 8 (Fig. 2) mit den Metallfacetten 9 bildet. Eine dünne Fotoresistschicht 12 (z. B. positiver Fotoresist Typ « Shipley AZ 1340 ») wird auf der Metallschicht 11 deponiert. Die Dicke dieser Fotoresistschicht 12 ist nicht kritisch, doch sollte die Schicht gleichmässig und ihre Dicke klein sein im Vergleich zu den Abmessungen a und b. Die Fotoresistschicht 12 wird mit einem periodisch variierenden Strahlungsmuster 13 belichtet, das die gleichen Spatialfrequenzen und die gleiche Orientierung aufweist wie die zu erzeugende Flächenstruktur der diskontinuierlichen Reflexionsschicht 8 (Fig. 2). Diese Belichtung kann mittels interferierender kohärenter Lichtstrahlen oder mittels einer photolithographischen Maske und einer geeigneten Lichtquelle erfolgen. Anschliessend an die Belichtung wird die Fotoresistschicht 12 entwickelt ; dabei bleiben in den Bereichen der Breite a Balken 12a der Fotoresistschicht 12 bestehen, während in den Bereichen der Abstände b die Metallschicht 11 wieder zum Vorschein kommt. Mit einem geeigneten Aetzmittel wird die Metallschicht 11 in den Bereichen der Abstände b entfernt ; die Kunststoffschicht 7a bleibt dabei intakt. Durch eine zweite Belichtung und Entwicklung werden auch die Balken 12a der ursprünglichen Fotoresistschicht 12 entfernt. Auf der Kunststoffschicht 7a verbleiben die Metallfacetten 9 der diskontinuierlichen Reflexionsschicht 8. Auf diese sowie auf die freie Fläche der Kunststoffschicht 7a wird eine zweite Kunststoffschicht 7b aufgetragen ; die Kunststoffschichten 7a und 7b bestehen aus dem gleichen Material und bilden zusammen die homogene dielektrische Schicht 7. Die Dicke der Kunststoffschicht 7b ist nicht kritisch und kann gross sein im Vergleich zur Dicke d.

Die beschriebenen Herstellungsschritte können in abgewandelter Art in einer anderen Reihenfolge durchgeführt werden. Beispielsweise kann das Sicherheitselement von der anderen Seite her aufgebaut werden, indem die diskontinuierliche Reflexionsschicht 8 auf die in diesem Fall als Substrat dienende Kunststoffschicht 7b aufgetragen, diese Struktur mit der Kunststoffschicht 7a beschichtet und schliesslich die kontinuierliche Reflexionsschicht auf der Kunststoffschicht 7a deponiert wird. Anstelle eines positiven Fotoresist kann auch ein negativer Fotoresist verwendet werden. Schliesslich ist es möglich, den Fotoresist sowohl als Maskenschicht zur Herstellung der Metallfacetten 9 als auch dielektrische Schicht 7 zu verwenden. Dabei wird auf die Reflexionsschicht 6 ein negativer Fotoresist aufgetragen, der nach ganzflächiger Belichtung die Schicht 7a bildet. Nach der Deposition der Metallschicht 11 werden durch Auftragen einer Schicht aus negativem Fotoresist, Belichten und Entwickeln die Balken 12a erzeugt. Sodann werden die unbedeckten Bereiche der Metallschicht 11 weggeätzt und schlussendlich mit einer weiteren Fotoresistschicht, welche die Schicht 7b bildet, die Zwischenräume zwischen dem Balken 12a ausgefüllt und die Balken 12a überdeckt.

Die Herstellung des beschriebenen beugungsoptischen Sicherheitselementes erfordert die Beherrschung einer hochgezüchteten Technologie und den Einsatz schwer zugänglichen Anlagen und Einrichtungen der hochpräzisen Beschichtungstechnologie und Photolithographie. Der dem Sicherheitselement innewohnende Sicherheitswert ist daher sehr hoch. Ausserdem müssen einem potientiellen Fälscher die Einzelheiten der Phasenbeugungsstruktur 10, das heisst die Abmessungen a, b und d sowie die Orientierung der Struktur bekannt sein, um ein erfolgversprechendes Falsifikat herstellen zu können. Es ist leicht einzusehen, dass es praktisch unmöglich ist, die Phasenbeugungsstruktur 10 eines echten Sicherheitselementes freizulegen, um die Struktur zu reproduzieren oder zu kopieren. Wird versucht, durch chemische oder physikalische Verfahren die dielektrische Schicht 7 abzutragen, um an die verborgene Phasenbeugungsstruktur 10 heranzukommen, so wird dabei unweigerlich auch die Phasenbeugungsstruktur 10 zerstört, zumal die diskontinuierlichen Reflexionsschicht 8 ausserordentlich dünn ist und ihre Dicke typisch nur einige hundert Angström (10 nm) beträgt, während der Abstand d sehr viel grösser zu wählen ist und z. B. ein Viertel der Wellenlänge des Leselichtstrahls 4 beträgt.

Der Linienabstand der Flächenstruktur der diskontinuierlichen Reflexionsschicht 8, d. h. im Falle eines Beugungsgitters die Gitterkonstante, soll höchstens 10 µm betragen, damit die Beugungseffekte überwiegen und eine hohe Fälschungssicherheit gewährleistet ist. Durch örtliche Variation des Linienabstandes und/oder der Orientierung der Gitterlinien kann die Fälschungssicherheit weiter gesteigert werden. Schliesslich kann die Phasenbeugungsstruktur 10 auch ein eigentliches Hologramm sein.

Für das beschriebene Sicherheitselement ergeben sich zahlreiche Anwendungsmöglichkeiten als Echtheitsmerkmal auf Dokumenten, Zahlungsmitteln, Waren usw. Wenn auf der Spiegelseite des Sicherheitselementes eine Klebeschicht angeordnet wird, so lässt sich das Sicherheitselement auf einfache Weise auf einem Kunststoff- oder Papierträger z. B. eines Dokumentes anbringen. Mittels einer transparenten Klebeschicht auf der Gitterseite des Sicherheitselementes kann dieses auf einem transparenten Träger eines Dokumentes appliziert werden ; dies erlaubt beispielsweise, in einem Debitkarten-System die in Form der Phasenbeugungsstruktur 10 codierte optische Information auf der einen Seite der Debitkarte auszulesen und gleichzeitig von der gegenüberliegenden Seite her die Information z. B. mittels eines thermischen Löschkopfes zu modifizieren oder auszulöschen. Bei geeigneter Wahl des Materials und der thermischen Eigenschaften der dielektrischen Schicht 7, in welche die Phasenbeugungsstruktur 10 eingebettet ist, kann das Sicherheitselement auf dem üblichen Material gebräuchlicher Plastikkarten (Identitätskarten, Kreditkarten, Debitkarten) durch Heisslamination appliziert werden ; mittels thermischer Energie können in bekannter Weise ausgewählte Flächenbereiche der Phasenbeugungsstruktur 10 wieder ausgelöscht und dadurch eine individuelle Information in die Karte eingespeichert werden.

**Patentansprüche**

1. Beugungsoptisches Sicherheitselement zur Kennzeichnung der Echtheit von Dokumenten, Zahlungsmitteln, Waren und dgl. mit einer reflektierenden Phasenbeugungsstruktur (10), die durch die Flächenstruktur einer in einer dielektrischen Schicht (7) eingebetteten diskontinuierlichen Reflexionsschicht (8) und durch den Abstand (d) von einer zweiten Reflexionsschicht (6) bestimmt ist, dadurch gekennzeichnet, daß die zweite Reflexionsschicht eine auf einer Oberfläche der dielektrischen Schicht (7) angeordnete kontinuierliche Reflexionsschicht (6) ist.

2. Sicherheitselement nach Anspruch 1, dadurch gekennzeichnet, dass die beiden Reflexionsschichten (6 ; 8) eben und zueinander parallel sind.

3. Sicherheitselement nach Anspruch 1 oder 2, dadurch gekennzeichnet, dass der Linienabstand der Flächenstruktur der diskontinuierlichen Reflexionsschicht (8) höchstens 10 μm beträgt.

4. Sicherheitselement nach einem der Ansprüche 1 bis 3, dadurch gekennzeichnet, dass die Phasenbeugungsstruktur (10) ein Phasenbeugungsgitter ist.

5. Sicherheitselement nach einem der Ansprüche 1 bis 3, dadurch gekennzeichnet, dass die Phasenbeugungsstruktur (10) ein Phasenhologramm ist.

6. Sicherheitselement nach einem der Ansprüche 1 bis 5, dadurch gekennzeichnet, dass die kontinuierliche Reflexionsschicht (6) auf einem Substrat (5) angeordnet ist.

7. Sicherheitselement nach einem der vorhergehenden Ansprüche, dadurch gekennzeichnet, daß die diskontinuierliche Reflexionsschicht (8) eine Schichtdicke in der Größenordnung von 10 nm aufweist.

8. Sicherheitselement nach einem der vorangehenden Ansprüche, dadurch gekennzeichnet, daß auf einer Oberfläche des Sicherheitselements eine Klebeschicht angeordnet ist.

9. Verfahren zur Herstellung eines beugungsoptischen Sicherheitselements nach einem der vorhergehenden Ansprüche, dadurch gekennzeichnet, daß auf eine erste Kunststoffschicht (7a) eine kontinuierliche Metallschicht (11) aufgetragen wird, daß aus der Metallschicht (11) durch Belichten und Entwickeln einer Fotoresistschicht (12) und durch Ätzen die diskontinuierliche Reflexionsschicht (8) gebildet wird und daß auf die diskontinuierliche Reflexionsschicht (8) sowie auf die freie Fläche der ersten Kunststoffschicht (7a) eine zweite Kunststoffschicht (7b) aufgetragen wird, die zusammen mit der ersten Kunststoffschicht (7a) die dielektrische Schicht (7) bildet, deren eine Oberfläche mit der kontinuierlichen Reflexionsschicht (6) versehen ist bzw. wird.

**Claims**

1. A diffraction-optical security element for identifying the authenticity of documents, means of payment, goods and the like, comprising a reflecting phase diffraction structure (10) which is determined by the surface structure of a discontinuous reflection layer (8) embedded in a dielectric layer (7) and by the spacing (d) from a second reflection layer (6) characterised in that the second reflection layer is a continuous reflection layer (6) arranged on a surface of the dielectric layer (7).

2. A security element according to claim 1 characterised in that the two reflection layers (6 ; 8) are flat and mutually parallel.

3. A security element according to claim 1 or claim 2 characterised in that the line spacing of the surface structure of the discontinuous reflection layer (8) is at most 10 μm.

4. A security element according to one of claims 1 to 3, characterised in that the phase diffraction structure (10) is a phase diffraction grating.

5. A security element according to one of claims 1 to 3 characterised in that the phase diffraction structure (10) is a phase hologram.

6. A security element according to one of claims 1 to 5 characterised in that the continuous reflection layer (6) is arranged on a substrate (5).

7. A security element according to one of the preceding claims characterised in that the discontinuous reflection layer (8) is of a layer thickness of the order of magnitude of 10 nm.

8. A security element according to one of the preceding claims characterised in that an adhesive layer is disposed on a surface of the security element.

9. A process for the production of a diffraction-optical security element according to one of the preceding claims characterised in that a continuous metal layer (11) is applied to a first plastics layer (7a), that the discontinuous reflection layer (8) is formed from the metal layer (11) by exposure and development of a photoresist layer (12) and by etching, and that a second plastics layer (7b) is applied to the discontinuous reflection layer (8) and to the free surface of the first plastics layer (7a), the second plastics layer (7b), together with the first plastics layer (7a), forming the dielectric layer (7), one surface of which is or becomes provided with the continuous reflection layer (6).

**Revendications**

1. Elément de sécurité à diffraction optique pour caractériser la validité de documents, de moyens de règlement, d'articles et analogues, comportant une structure de diffraction de phase (10) qui est réfléchissante et qui est définie par la structure superficielle d'une couche réfléchissante discontinue noyée dans une couche diélectrique (7) et par l'espacement (d) par rapport à une seconde couche réfléchissante (6), caractérisé en ce que la seconde couche réfléchissante est une couche réfléchissante continue (6) disposée sur une surface de la couche diélectrique (7).

2. Elément de sécurité selon la revendication 1, caractérisé en ce que les deux couches réfléchissantes (6 ; 8) sont planes et parallèles entre elles.

3. Elément de sécurité selon les revendications 1 ou 2, caractérisé en ce que l'espacement de lignes de la structure superficielle de la couche réfléchissante discontinue (8) s'élève au maximum à 10 μm.

4. Elément de sécurité selon une des revendications 1 à 3, caractérisé en ce que la structure de diffraction de phase (10) est un réseau de diffraction de phase.

5. Elément de sécurité selon une des revendications 1 à 3, caractérisé en ce que la structure de diffraction de phase (10) est un hologramme de phase.

6. Elément de sécurité selon une des revendications 1 à 5, caractérisé en ce que la couche réfléchissante continue (6) est disposée sur un substrat (5).

7. Elément de sécurité selon une des revendications précédentes, caractérisé en ce que la couche réfléchissante discontinue (8) a une épaisseur de l'ordre de grandeur de 10 nm.

8. Elément de sécurité selon une des revendications précédentes, caractérisé en ce qu'une couche adhésive est disposée sur une surface de l'élément de sécurité.

9. Procédé de fabrication d'un élément de sécurité à diffraction optique selon une des revendications précédentes, caractérisé en ce que sur une première couche de matière plastique (7a) est déposée une couche métallique continue (11), en ce que, à partir de la couche métallique (11), par exposition et développement d'une couche de substance photosensible (12) et par gravure, la couche réfléchissante discontinue (8) est formée et en ce que sur la couche réfléchissante discontinue (8) ainsi que sur la surface libre de la première couche de matière plastique (7a) est déposée une seconde couche de matière plastique (7b), qui constitue avec la première couche de matière plastique (7a) la couche diélectrique (7) dont une surface est ou sera pourvue de la couche réfléchissante continue (6).

# Fig. 1

# Fig. 2

# Fig. 3